**Europäisches Patentamt**

**European Patent Office**

**Office européen des brevets**

(11) Numéro de publication: **0 187 072**
**B1**

# (12) FASCICULE DE BREVET EUROPEEN

(45) Date de publication du fascicule du brevet:
**07.12.88**

(51) Int. Cl.⁴: **B 60 G 3/20**

(21) Numéro de dépôt: **85402329.8**

(22) Date de dépôt: **27.11.85**

(54) **Train arrière de véhicule automobile.**

(30) Priorité: **30.11.84 FR 8418253**

(43) Date de publication de la demande:
**09.07.86 Bulletin 86/28**

(45) Mention de la délivrance du brevet:
**07.12.88 Bulletin 88/49**

(84) Etats contractants désignés:
**AT BE CH DE GB IT LI NL SE**

(56) Documents cités:
**EP-A- 0 095 780**
**DE-A- 2 828 758**
**DE-A- 2 924 368**
**FR-A- 2 565 530**
**GB-A- 2 087 322**
**US-A- 3 573 882**

**PATENTS ABSTRACTS OF JAPAN, vol. 9, no. 238**
**(M-416) [1961], 25th septembre 1985; & JP - A - 60 92 106**
**(HONDA GIKEN KOGYO K.K.) 23-05-1985**

(73) Titulaire: **REGIE NATIONALE DES USINES RENAULT,**
**Boîte postale 103 8-10 avenue Emile Zola,**
**F-92109 Boulogne-Billancourt (FR)**

(72) Inventeur: **Veneau, Jean, 21, Domaine de la Côte Noire,**
**F-92500 Rueil Malmaison (FR)**

(74) Mandataire: **Saint Martin, René et al, Régie Nationale**
**des Usines Renault Direction des Recherches et**
**Développements Service 0804 8-10, Avenue Emile-Zola,**
**F-92109 Boulogne Billancourt Cedex (FR)**

## Description

La présente invention se rapporte à un train arrière de véhicule automobile du type MAC-PHERSON comportant des caractéristiques anti-plongée lors du freinage.

En effet, on connaît déjà des trains arrière du type MAC-PHERSON essentiellement constitués par un amortisseur vertical relié à la caisse par une de ses extrémités et au porte-fusée par l'autre, cette dernière étant, par ailleurs, solidaire d'un tirant longitudinal fixé au châssis assurant ainsi le guidage de la roue.

La jonction entre la base de l'amortisseur, le porte-fusée et le frein étant rigide, elle entraîne lors du freinage une solidarisation de fait de la roue à l'amortisseur et par voie de conséquence un changement d'assiette de la carrosserie qui s'incline vers l'avant.

L'état de la technique en la matière peut ainsi être illustré par la demande de brevet européen EP-A-95 780 (TOYO KOGYO) qui décrit un train arrière du type à roue tirée, constitué d'un amortisseur fixé par sa partie supérieure à la caisse, sa partie inférieure étant solidarisée en rotation autour d'un axe supportant par ailleurs deux biellettes transversales dont l'extrémité opposée est réunie à la caisse, un tirant longitudinal reliant la caisse et la base de l'amortisseur à laquelle il est réuni par un axe horizontal et transversal par rapport au véhicule.

On remarquera toutefois que ledit tirant longitudinal n'est pas solidaire du système de freinage, contrairement à la disposition principale qui caractérise la présente invention, et de laquelle découle les propriétés anti-plongées de la suspension ainsi constituée.

La présente invention sera décrite au regard des figures 1 à 6 ci-jointes qui se rapportent respectivement:

— La figure 1, à une vue de côté schématique montrant un train arrière suivant l'état antérieur de la technique.

— La figure 2, à une vue schématique fonctionnelle de l'invention indiquant la différence de base avec le train précédent.

— La figure 3, à une vue en perspective 3/4 avant d'un train selon l'invention.

— La figure 4, à une vue analogue à la figure 3 d'une première variante de l'invention.

— La figure 5, à une vue de face d'une seconde variante.

— La figure 6, à une vue latérale d'une troisième variante.

— La figure 7, à une vue de face d'une autre variante.

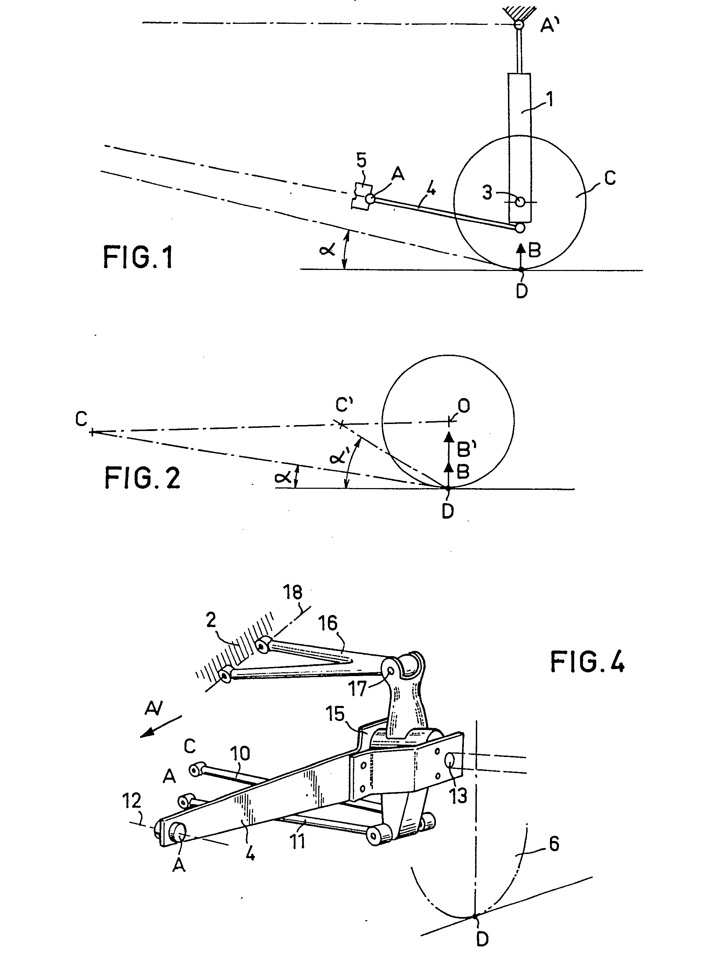

La suspension de la figure 1, selon l'état de la technique antérieure, comporte un amortisseur 1 solidaire à la caisse 2 et au porte-fusée 3 fixé au frein, ainsi qu'à un tirant 4 assurant le guidage de la roue 6, lui-même attaché en 5 à la caisse.

Lors du freinage, la roue 6 rendue solidaire de l'amortisseur 1 subit un mouvement combiné que l'on peut décomposer comme résultant d'une rotation autour du point A de fixation du tirant 4 à la caisse et d'un coulissement de l'amortisseur 1, une force verticale suivant la flèche B rapproche alors la roue 6 de la caisse. Cette dernière s'oppose ainsi au transfert des charges de l'arrière vers l'avant du véhicule au moment de la décélération se traduisant par une élévation de l'arrière de la carrosserie. C'est ce phénomène que le train arrière selon l'invention a pour but d'atténuer.

Considérons le point de rencontre de la normale à la tige de l'amortisseur passant par le pont A' de sa fixation à la caisse 2 et du prolongement du tirant 4, ceci dans le plan déterminé par ce dernier et l'amortisseur 1. C'est le centre instantané de rotation du train qui, dans le cas de la figure 1, est rejeté loin à gauche.

L'angle défini, d'une part, par la droite passant par ce point et le contact D entre le sol et la roue et, d'autre part, par l'horizontale passant par D est directement proportionnel à la force verticale suivant la flèche B qui s'opposera à l'élévation de l'arrière de la caisse lors du freinage. Si l'on veut accroître cette force B en B' (voir figure 2), il faut augmenter l'angle $\alpha$ en $\alpha'$ et, pour ce faire, rapprocher le centre instantané de rotation C en C' suivant le schéma de la figure 2.

La disposition utilisée pour la réalisation du train selon l'invention permet ce résultat en accordant un degré de liberté supplémentaire à la liaison de la roue 6 au châssis, notamment lors du freinage, en autorisant une rotation autour d'un axe horizontal et transversal 13 par rapport au véhicule du tirant 4 et du frein qui lui est solidaire.

Du fait de cette transformation, on élimine lors du freinage l'influence de l'amortisseur 1 dans les réactions dynamiques du train qui s'apparente alors à une simple géométrie de train à roue tirée où la charnière du bras serait située en A.

De ce fait, le nouveau centre instantané de rotation C' se trouve confondu avec le point A d'articulation du bras tiré 4 à la caisse. L'angle $\alpha'$ (analogue à $\alpha$ défini plus haut) se trouve sensiblement accru du fait du rapprochement du centre instantané de rotation de C en C' et, de la même façon, la force B' qui en résulte qui s'oppose alors plus fortement au relèvement de l'arrière du véhicule en phase de décélération.

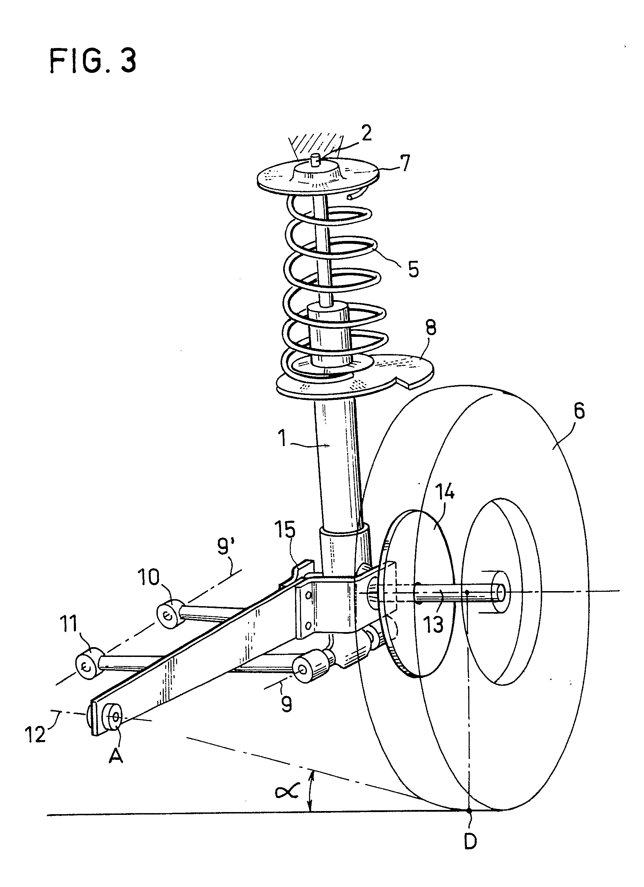

La figure 3 illustre une réalisation pratique de ce qui précède.

L'amortisseur 1 est fixé par sa partie supérieure à la caisse 2 et comporte un ressort hélicoïdal 5 situé de manière connue entre les coupelles 7–8; sa partie inférieure est solidaire en rotation autour d'un axe 9 horizontal et longitudinal par rapport au véhicule des extrémités de deux biellettes transversales 10–11 dont les extrémités opposées sont mobiles en rotation autour d'au moins un axe 9' parallèle ou non à l'axe 9.

Un tirant 4 est fixé par l'une de ses extrémités à la caisse en A au moyen d'un axe 12 horizontal et transversal au véhicule, son autre extrémité en forme de fourche 15 est montée en rotation au moyen d'un axe 13 à la base de l'amortisseur 1, coaxialement à la fusée de la roue 6. Le frein 14 est solidaire de la fourche 15.

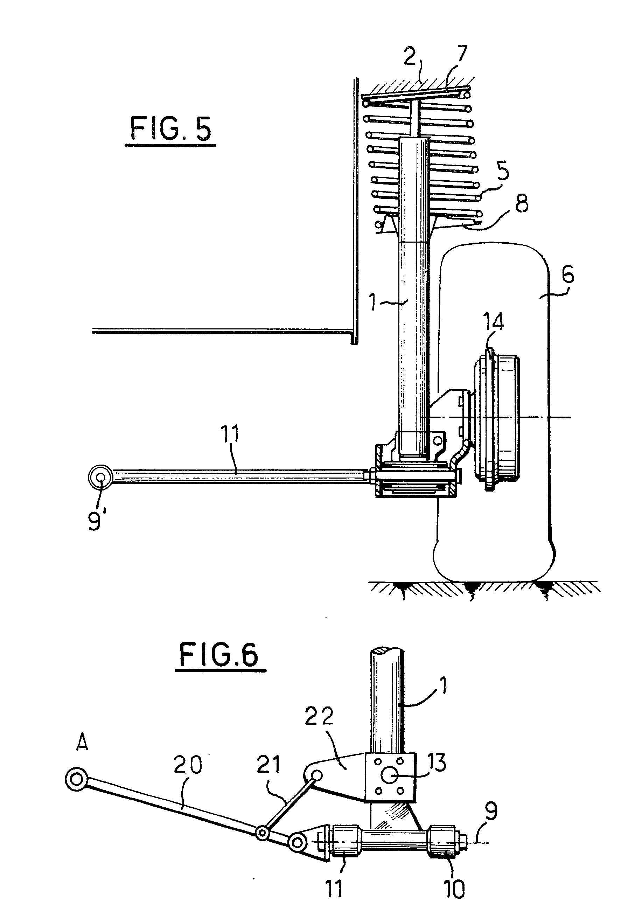

La figure 4 se rapporte à une variante de la figure 3 dans laquelle, toutes choses étant égales par ailleurs, on remplace le guidage précédent de la roue 6 à la caisse au moyen d'une jambe de force par une triangulation supérieure 16 fixée à la caisse 2 et mobile autour d'axes horizontaux 17–18. Les deux branches de cette triangulation 16 peuvent rencontrer le porte-fusée en un point unique, selon la représentation ci-joint ou en deux points distincts.

L'amortisseur et le ressort non figurés peuvent être disposés de toute façon convenable en fonction de l'espace disponible sans considération de leur participation à la rigidité du train. On peut également rendre moteur le train selon l'invention, sans difficulté particulière en dimensionnant en conséquence ses différents composants et en particulier le tirant 4.

Selon la variante de la figure 5, la différence par rapport à la disposition de la figure 3 se situe au niveau de l'articulation 13 entre le tirant 4 et l'amortisseur 1. Dans ce cas, ladite articulation ne se situe pas coaxialement à la fusée de la roue 6 mais plus bas à la jonction entre les biellettes transversales 10–11 et l'amortisseur 1.

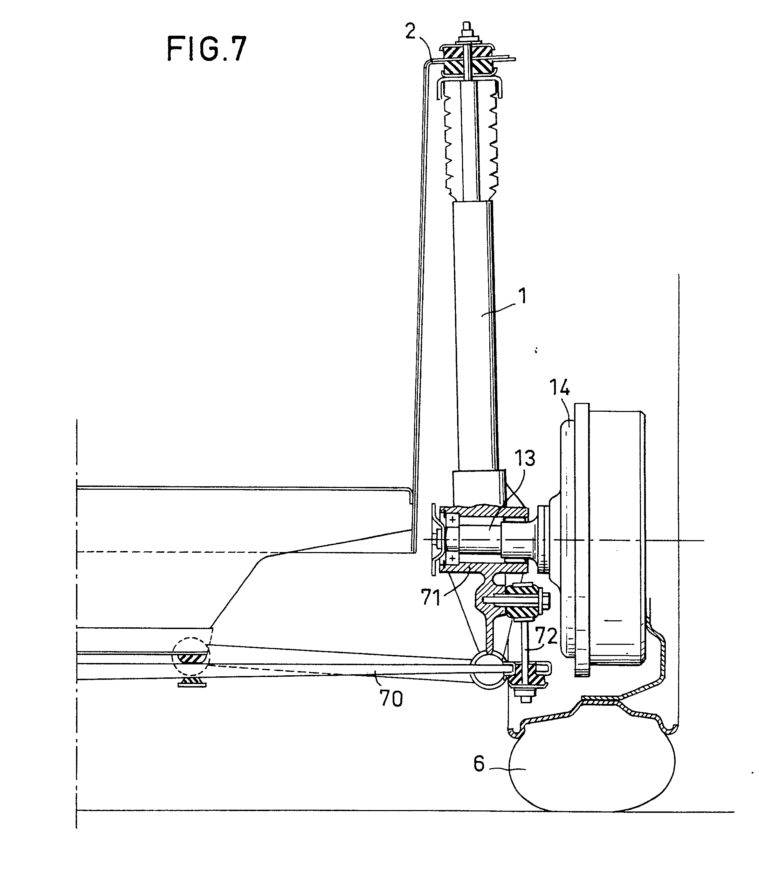

Dans le cas de la figure 6, le tirant 4 qui, comme pour le mode de représentation précédent aboutit à la base de l'amortisseur 1 au niveau de sa jonction avec les biellettes 10–11, est remplacé par une biellette 20. Une seconde biellette 21 solidarise l'extrémité de cette dernière qui est opposée à sa fixation à la caisse à la base de l'amortisseur 1 par l'intermédiaire d'une pièce 22, qui immobilise par ailleurs le système de freinage analogue à 14 de la figure 1 et qui supporte l'axe 13. La figure 7 se rapporte à une variante selon laquelle l'amortisseur 1, fixé par sa partie supérieure à la caisse 2 ne comporte pas de ressort 5. Celui-ci est remplacé par un ressort à lames transversal 70 relié à l'une de ses extrémités au porte-fusée 71 par une biellette 72 et à la caisse par son extrémité opposée.

## Revendications

1. Train arrière de véhicule automobile du type à roue tirée, comportant un amortisseur (1) dont la partie inférieure est solidarisée en rotation autour d'un premier axe (9) à deux biellettes transversales (10–11) par ailleurs réunies à la caisse, et qui sert d'articulation au moyen d'un second axe (13) horizontal et transversal à l'une des extrémités d'un tirant (4) qui prend également appui sur la caisse par son autre extrémité mobile autour d'un troixième axe (12) horizontal et transversal, caractérisé par le fait que l'extrémité du tirant (4), qui s'articule à la base de l'amortisseur (1) par une fourchette (15), est solidaire du système de freinage.

2. Train arrière selon la revendication 1, caractérisé en ce que le second axe (13) se situe au niveau de la fusée de la roue (6).

3. Train arrière selon la revendication 1, caractérisé en ce que le second axe (13) se situe au niveau des biellettes (10–11).

4. Train arrière selon la revendication 1, caractérisé en ce que le tirant 4 est remplacé par une biellette (20) réunie, d'une part, à la caisse et, d'autre part, à l'axe (9) de rotation des biellettes (10–11), cette dernière extrémité de la biellette (20) étant d'autre part réunie à la base de l'amortisseur (1) par l'intermédiaire d'une biellette (21) et d'une pièce (22) qui immobilise le système de freinage et qui supporte le second axe d'articulation (13).

5. Train arrière du véhicule automobile du type à roue tirée comportant deux biellettes transversales (10–11) reliant la partie inférieure du porte-fusée à la caisse, caractérisé par le fait qu'il possède un tirant (4) mobile en rotation autour d'un porte-fusée mais solidaire du système de freinage, son extrémité opposée étant fixée à la caisse, le guidage de sa partie supérieure étant assuré par une triangulation (16).

## Patentansprüche

1. Hinterradaufhängung eines Kraftfahrzeuges für gezogene Räder, mit einem Dämpfer (1), dessen unteres Ende drehfest um eine erste Achse (9) mit zwei Querträgern (10, 11) verbunden ist, die im übrigen mit der Karosserie verbunden sind und der mittels einer zweiten waagrechten sich quer erstreckenden Achse (13) an einem Ende eines Längslenkers (4) angelenkt ist, der sich ebenfalls an der Karosserie abstützt mit seinem anderen, um eine dritte horizontale und sich quer erstreckende Achse (12) beweglichen Ende, dadurch gekennzeichnet, dass das Ende des Längslenkers (4), das mittels einer Gabel (15) am Unterteil des Dämpfers (1) angelenkt ist, fest mit der Bremsanordnung verbunden ist.

2. Hinterradaufhängung nach Anspruch 1, dadurch gekennzeichnet, dass die zweite Achse (13) auf Höhe des Achszapfens für das Rad (6) angeordnet ist.

3. Hinterradaufhängung nach Anspruch 1, dadurch gekennzeichnet, dass die zweite Achse (13) auf Höhe der Querträger (10, 11) angeordnet ist.

4. Hinterradaufhängung nach Anspruch 1, dadurch gekennzeichnet, dass der Längslenker (4) durch einen Träger (20) ersetzt ist, der einerseits mit der Karosserie und andererseits mit der Drehachse (9) der Querträger (10, 11) verbunden ist, wobei das letztere Ende des Trägers (20) zusätzlich mit dem Unterteil des Dämpfers (1) über einen Träger (21) und ein Teil (22) verbunden ist, das die Bremsanordnung festhält und die zweite Längsachse (13) aufnimmt.

5. Hinterradaufhängung eines Kraftfahrzeuges für gezogene Räder, mit zwei Querträgern (10, 11), die das Unterteil des Achsschenkellagers mit der Karosserie verbinden, dadurch gekennzeichnet, dass sie einen Längsträger (4) aufweist, der um ein Achsschenkellager drehbar ist, jedoch fest mit der Bremsanordnung verbunden ist, wobei sein entgegengesetztes Ende mit der Karosserie verbunden ist und die Führung des oberen Abschnitts durch ein Dreiecksgestänge (16) gewährleistet wird.

## Claims

1. A rear suspension of the driven wheel type for an automotive vehicle, comprising a shock absorber (1) having its lower part rotatably mounted about a first axis (9) by means of two transverse struts (10, 11) which are also connected with the body or chassis of the vehicle, the said lower part being pivoted about a second axis (13), which is horizontal and transverse, to one of the ends of an arm (4) which is also mounted on the body or chassis at its other end, the arm (4) being movable about a third axis (12) which is horizontal and transverse, characterised by the fact that the end of the arm (4), which is pivoted to the base of the shock absorber (1) by means of a fork portion (15), is fixed with respect to the braking system.

2. A rear suspension according to Claim 1, characterised in that the second axis (13) is situated in the region of the axle of the road wheel (6).

3. A rear suspension according to Claim 1, characterised in that the second axis (13) is situated in the region of the said struts (10, 11).

4. A rear suspension according to Claim 1, characterised in that the arm (4) is replaced by a strut (20) which is connected at one end to the body or chassis, and at the other end to the axis of rotation (9) of the struts (10, 11), the said other end of the strut (20) being coupled to the base of the shock absorber (1) by means of a mounting member (22), which is rigidly secured to the braking system and which carries the second pivot axis (13), and a link (21) coupling the strut (20) to the mounting member (22).

5. A rear suspension of the driven wheel type for an automotive vehicle, comprising two transverse struts (10, 11) connecting the lower part of the axle casing to the body or chassis, characterised by the fact that it includes an arm (4) which is rotatably movable about an axle casing but which is fixed with respect to the braking system, its opposite end being fixed to the body or chassis, and its upper part being guided by means of a triangulated linkage (16).

1/4

FIG.1

FIG. 2

FIG. 4

## FIG. 3

EP 0 187 072 B1

3/4

FIG. 5

FIG. 6

FIG.7